(19) Europäisches Patentamt
European Patent Office
Office européen des brevets

(11) EP 1 888 605 B1

(12) **EUROPÄISCHE PATENTSCHRIFT**

(45) Veröffentlichungstag und Bekanntmachung des Hinweises auf die Patenterteilung:
**14.09.2011 Patentblatt 2011/37**

(21) Anmeldenummer: **06742897.9**

(22) Anmeldetag: **12.05.2006**

(51) Int Cl.:
***C07F 9/30*** *(2006.01)*

(86) Internationale Anmeldenummer:
**PCT/EP2006/004485**

(87) Internationale Veröffentlichungsnummer:
**WO 2006/128563 (07.12.2006 Gazette 2006/49)**

(54) **IONISCHE FLÜSSIGKEITEN MIT NIEDRIGER VISKOSITÄT**

LOW-VISCOSITY IONIC LIQUIDS

LIQUIDES IONIQUES DE FAIBLE VISCOSITE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **02.06.2005 DE 102005025315**

(43) Veröffentlichungstag der Anmeldung:
**20.02.2008 Patentblatt 2008/08**

(73) Patentinhaber: **Merck Patent GmbH**
**64293 Darmstadt (DE)**

(72) Erfinder:
- **WILLNER, Helge**
  **45481 Mühlheim/Ruhr (DE)**
- **IGNATYEV, Nikolai (Mykola)**
  **47058 Duisburg (DE)**
- **BISSKY, German**
  **42109 Wuppertal (DE)**
- **HECKMEIER, Michael**
  **69502 Hemsbach (DE)**
- **WELZ-BIERMANN, Urs**
  **64646 Heppenheim (DE)**

(56) Entgegenhaltungen:
**WO-A-03/087110 WO-A-2004/106287**
**WO-A-2004/106288**

- **BUZZEO, MARISA C. ET AL.: "Non-Holoaluminate Room -Temperature Ionic liquids in Electrochemistry- A Review" CHEMPHYCHEM, Bd. 5, Nr. 8, 10. August 2004 (2004-08-10), Seiten 1106-1120, XP002399493 Weinheim**
- **ZHANG, X. ET AL.: "Dependence of rate constants of Heterogeneous Electron Transfer Reactions on Viscosity" JACS, Nr. 107, 1985, Seiten 3719-3721, XP002399494**
- **DATABASE BEILSTEIN [Online] BEILSTEIN INSTITUTE FOR ORGANIC CHEMISTRY, FRANKFURT-MAIN, DE; XP002399496 gefunden im XFIRE Database accession no. BRN 6764178. BRN 6766089 & PAVLENKO N V ET AL: JOURNAL OF GENERAL CHEMISTRY USSR, CONSULTANTS BUREAU, NEW YORK, NY, US, Bd. 55, Nr. 7, 1985, Seiten 1410-1414,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 888 605 B1

Printed by Jouve, 75001 PARIS (FR)

## Beschreibung

Die vorliegende Erfindung betrifft ionische Flüssigkeiten mit niedriger Viskosität und hoher elektrochemischer Stabilität. gemäβ Anspruch 1.

Ionische Flüssigkeiten oder flüssige Salze sind ionische Spezies, die aus einem organischen Kation und einem in der Regel anorganischen Anion bestehen. Sie enthalten keine neutralen Moleküle und weisen meistens Schmelzpunkte kleiner 373 K auf.

Das Gebiet der ionischen Flüssigkeiten wird zur Zeit intensiv erforscht, da die Anwendungsmöglichkeiten vielfältig sind. Übersichtsartikel zu ionischen Flüssigkeiten sind beispielsweise R. Sheldon "Catalytic reactions in ionic liquids", Chem. Commun., 2001, 2399-2407; M.J. Earle, K.R. Seddon "Ionic liquids. Green solvent for the future", Pure Appl. Chem., 72 (2000), 1391-1398; P. Wasserscheid, W. Keim "Ionische Flüssigkeiten - neue Lösungen für die Übergangsmetalikatalyse", Angew. Chem., 112 (2000), 3926-3945; T. Welton "Room temperature ionic liquids. Solvents for synthesis and catalysis", Chem. Rev., 92 (1999), 2071-2083 oder R. Hagiwara, Ya. Ito "Room temperature ionic liquids of alkylimidazolium cations and fluoroanions", J. Fluorine Chem., 105 (2000), 221-227).

Die Eigenschaften ionischer Flüssigkeiten, z.B. Schmelzpunkt, thermische und elektrochemische Stabilität, Viskosität, werden stark von der Natur des Anions beeinflusst. Demgegenüber können die Polarität und die Hydrophilie bzw. Lipophilie durch die geeignete Wahl des Kation/Anion-Paares variiert werden.

Insbesondere bei Anwendungen im Bereich der Elektrochemie und bei der Auswahl geeigneter Lösungsmittel zur Durchführung chemischer Reaktionen spielt die Viskosität eine große Rolle. Ist die ionische Flüssigkeit zu viskos, dann ist bei elektrochemischen Anwendungen die Diffusion von Ionen zu langsam und die elektrochemischen Prozesse fallen zu langsam aus. Im Falle von chemischen Reaktionen führt die verringerte massenabhängige Mobilität der Reaktanden in höher viskosen Flüssigkeiten zu einer Verlangsamung der Reaktionsgeschwindigkeit. Zur Lösung dieses Problems wurden eine Reihe von ionischen Flüssigkeiten vorgeschlagen, z.B. mit $[N(CN)_2]$-, $[N(CF_3)_2]$- oder Thiocyanat-Anionen, deren Viskosität geringer ist. Die genannten Systeme finden trotz dieses Vorteils aber wenig praktische Anwendung, weil deren Hydrolyse- und Thermostabilität sowie deren Stabilität gegenüber Oxidation und/oder Reduktion für diese Anwendungen unzureichend sind.

Es bestand daher die Aufgabe, ionische Flüssigkeiten zu entwickeln, die für die Anwendung in elektrochemischen Applikationen und als Lösungsmittel zur Durchführung chemischer Reaktionen geeignet sind.

Gegenstand der Erfindung sind demgemäss ionische Flüssigkeiten umfassend Kationen und Anionen, wobei das Anion der Formel $[(R_F)_2P(O)]_2N^-$ entspricht, wobei $R_F$ die Bedeutung

$$(C_nF_{2n-x+1}H_x)$$

mit n = 1-6 und x = 0-4 hat, wobei für n = 1 x = 0 bis 2 sein soll, wobei die Viskosität 10 bis 100 $mm^2/s$ beträgt und die elektrochemische Stabilität gegenüber Reduktion und Oxidation (das elektrochemische Fenster) mehr als 4.5 V beträgt gemäβ Anspruch 1. Der Wert für die elektrochemische Stabilität von 4.5 V bezieht sich dabei auf das gesamte elektrochemische Fenster, das heißt er umspannt den gesamten Bereich von Reduktion zu Oxidation. Ionische Flüssigkeiten, die dieses komplexe Anforderungsprofil erfüllen eignen sich insbesondere für den Einsatz in elektrochemischen Applikationen und in organischen Synthesen und erlauben damit den Zugang zu neuen Reaktionsmedien für chemische Prozesse.

Bei der Viskosität handelt es sich in der vorliegenden Erfindung um die kinematische Viskosität, die sich aus dem Verhältnis der dynamischen Viskosität und der Dichte der Flüssigkeit ergibt. Diese Viskosität liegt bei den erfindungsgemäßen Ionischen Flüssigkeiten bei 10 bis 100 $mm^2/s$, vorzugsweise bei 20 bis 60 $mm^2/s$. Die genannten Grenzbereiche für die kinematische Viskosität entsprechen Werten von 10 bis 170 mPa·s (cp) für die dynamische Viskosität. Die Bestimmung der kinematischen Viskosität erfolgt in der vorliegenden Erfindung mit einem Rotations-Viskosimeter des Typs SVM 3000 der Firma Anton Paar und gemäß dem Standard ASTM D7042, "Standard Test Method for Dynamic Viscosity and Density of Liquids by Stabinger Viscometer (and the Calculation of Kinematic Viscosity)" von ASTM International.

Die elektrochemische Stabilität wird mittels Cyclovoltammetrie bestimmt. Im Rahmen der vorliegenden Erfindung erfolgt die Messung mit einem Gerät des Typs Autolab PGSTAT 30 (Fa. Eco Chemie). Die in der vorliegenden Erfindung angegebenen Werte für das elektrochemische Fenster wurden gemessen in 0.5 Molarer Lösung in $CH_3CN$ mit einer Glassy-carbon Electrode als Arbeitselektrode, einer Platinelektrode und einer $Ag/AgNO_3$ ($CH_3CN$)-Referenzelektrode . Die Potentialwerte werden bezogen auf $E^0$ von Ferrocen.

Daneben spielt die Reinheit der ionischen Flüssigkeit ebenfalls eine große Rolle. Insbesondere bei den oben genannten Anwendungen ist die Reinheit, das heißt die Abwesenheit von Verunreinigungen, ein maßgebliches Kriterium für die Anwendbarkeit. Vorzugsweise weisen die ionischen Flüssigkeiten gemäß der vorliegenden Erfindung einen ChloridGehalt auf, der kleiner als 100 ppm ist. Ionische Flüssigkeiten, die die Anforderungen an die Viskosität, elektrochemische Stabilität und die Reinheit erfüllen, sind besonders geeignet, in den oben genannten Anwendungen eingesetzt

zu werden. Vielmehr ist es durch die Kombination dieser Parameter erst möglich Verbesserungen im Hinblick auf die Anwendungen in elektrochemischen Applikationen oder als Lösungsmittel für chemische Reaktionen zu realisieren.

Vorzugsweise bedeutet $R_f$ $CF_3$, $C_2F_5$, $C_3F_7$ oder $C_4F_9$. Insbesondere bevorzugt ist das Anion $[(C_2F_5)_2P(O)]_2N^-$.

Verbindungen enthaltend chemisch ähnliche Anionen sind als Zusatzbestandteil in aprotischen Solventien zur Bereitstellung von Ionen-leitenden Materialien in US 6,682,855 genannt, wobei sich die Verbindungen in US 6,682,855 von den erfindungsgemäßen Verbindungen darin unterscheiden, dass beim Vorhandensein von perfluorierten Alkylgruppen mindestens ein Fluoratom am Phosphor gebunden vorliegen muss. Durch die Kombination dieser Verbindungen mit entsprechenden Solveritien spielt die Viskosität der genannten Verbindungen keine Rolle, da die Viskosität des Ionen-leitenden Materialien maßgeblich durch das Solvens bestimmt wird. In der vorliegenden Erfindung dagegen spielt die Viskosität der ionischen Flüssigkeit die entscheidende Rolle, insbesondere im Rahmen der Verwendung als neue Reaktionsmedien für organische Synthesen.

Buzzeo, Marisa C. et al, CHEMPHYSCHEM, Bd. 5, Nr. 8, 1106-1120 ist ein Übersichtsartikel über Nicht-Haloaluminat ionische Flüssigkeiten in Elektrochemie und offenbart beispielsweise als Anionen der ionischen Flüssigkeiten Tetrafluoroborat, Hexafluorophosphat oder Bis(trifluormethansulfonyl)imid.

Zhang et al, J. Am. Chem. Soc. 1985, 107, 3719-3721 beschreibt Studien über das elektrochemische Verhalten von Ferrocen in Dimethylsulfoxid in Anwesenheit von 0.5 M Tetrabutylammoniumtetrafluoroborat und Sucrose.

WO 2003/087110 beschreibt ein Verfahren zur Herstellung von Bis(perfluoralkyl)phosphiinsäuren und deren Salzen.

Pavlenko, N.V. et al, J. Gen. Chem. USSR (Engl. Transl.), 55, 7, 1985, 1410-1414 beschreibt die Synthese von Silber Bis(heptafluoropropyl)phosphinimid, Bis(heptafluoropropyl)phosphinamid und Bis(heptafluoropropyl)phosphinimid.

WO 2004/106287 beschreibt Uronium- oder Thiouroniumsalze mit einer Vielzahl von Anionen, beispielsweise auch Bis(pentafluoroethyl)phosphinat.

WO 2004/106288 beschreibt ionische Flüssigkeiten mit Guanidiniumkationen und einer Vielzahl von Anionen, beispielsweise Triflat, Tris(pentafluoroethyl)trifluorophosphat, Pentafluoroethyltrifluoroborat oder Tetrafluoroborat.

Bei den Kationen der ionischen Flüssigkeit gemäß der vorliegenden Erfindung. handelt es sich um organische Kationen, Ammoniumkationen ausgewahlt aus der Formel (1)

$$[NR_4]^+ \qquad (1),$$

beschrieben werden, wobei

R jeweils unabhängig voneinander Methyl, Ethyl, Isopropyl, Propyl, Butyl, Sek. Butyl, tert.-Butyl, Pentyl odo Hexyl bedeutet oder der Formel (2)

$$[PR^2_4]^+ \qquad (2),$$

beschrieben werden, wobei

$R^2$ jeweils unabhängig voneinander Methyl, Ethyl, Isopropyl, Propyl, Butyl, Sek.-Butyl, tert.-Butyl, Pentyl oder Hexyl bedeutet oder Uroniumkationen der Formel (3)

$$[(R^3R^4N)\text{-}C(=OR^5)(NR^6R^7)]^+ \qquad (3),$$

oder Thlouroniumkationen der Formel (4),

$$[(R^3R^4N)\text{-}C(=SR^5)(NR^6R^7)]^+ \qquad (4),$$

beschrieben werden, wobei

$R^3$ bis $R^7$ jeweils unabhängig voneinander Methyl, Ethyl, n-Propyl, Isopropyl oder n-Butyl bedeutet oder Guanidiniumkationen der Formel (5)

$$[C(NR^8R^9)(NR^{10}R^{11})(NR^{12}R^{13})]^+ \qquad (5),$$

beschrieben werden, wobei

$R^8$ bis $R^{13}$ jeweils unabhängig voneinander Methyl, Ethyl, n-Propyl, Isopropyl oder n-Butyl bedeutet oder das Kation der Formel (6)

entspricht $[HetN]^+$ (6)

wobei
$HetN^+$

Imidazolium

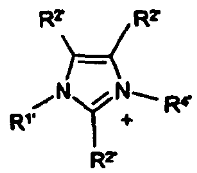

,

bedeutet, wobei die Substituenten

$R^{1'}$ und $R^{4'}$ jeweils unabhängig voneinander Methyl, Ethyl, n-Butyl, oder Hexyl bedeuten und $R^{21}$ Wasserstoff ist.

Die Substituenten R und $R^2$ in den Verbindungen der Formel (1) oder (2) können dabei gleich oder verschieden sein. Bevorzugt sind die Substituenten R und $R^2$ verschieden.

Ebenfalls Gegenstand der vorliegenden Erfindung sind Verfahren zur Herstellung von ionischen Flüssigkeiten umfassend Kationen und Anionen gemäß Anspruch 1, wobei das Anion der Formel $[(R_F)_2P(O)]_2N^-$ entspricht, wobei $R_F$ die Bedeutung

$(C_nF_{2n-x+1}H_x)$

mit n = 1-6 und x= 0-4 hat, wobei für n = 1 x = 0 bis 2 sein soll, wobei Verbindungen der allgemeinen Formel (7)

$[(R_F)_2P(O)]_2NY$ (7)

worin Y = H, Alkalimetalle, Erdalkalimetalle und Metalle der Gruppen 11 und 12 des Periodensystems bedeutet, in einem Lösungsmittel oder Lösungsmittelgemisch mit Verbindungen des Typs $K^+A^-$ umgesetzt werden, wobei $K^+$ ausgewählt ist aus den vorab genannten Kationen und $A^-$ = $Cl^-$, $Br^-$, $I^-$, $BF_4^-$, $R'OSO_3^-$, $R'SO_3^-$ oder $(R')_2P(O)O^-$ bedeutet, wobei die Substituenten R' eine zuvor beschriebene Bedeutung haben. $A^-$ ist besonders bevorzugt $Cl^-$, $Br^-$, $I^-$, $BF_4^-$, $HSO_4^-$ $CH_3OSO_3^-$, $C_2H_5OSO_3^-$, $CH_3SO_3^-$, $CF_3SO_3^-$, $(C_2F_5)_2P(O)O^-$ und ganz besonders bevorzugt $Cl^-$, $Br^-$, $CH_3SO_3^-$, $C_2H_5OSO_3^-$ oder $(C_2F_5)_2P(O)O^-$.

Besonders bevorzugt bedeutet Y H, Alkalimetalle und insbesondere Kalium oder Natrium.

Einige von den Verbindungen der Formel (7) sind dem Fachmann bekannt und können nach Verfahren wie sie zB. in N.V. Pavlenko, G.I. Matuschecheva, V. Ya. Semenii, L.M. Yagupolskii. Zh. Obsh. Khim, 1985, 55, 1586-1590 beschrieben sind, hergestellt werden.

Die Umsetzung kann bei Temperaturen im Bereich von 0 bis 150°C, vorzugsweise bei 0 bis 50°C und insbesondere bei Raumtemperatur erfolgen.

Geeignete Lösungsmittel oder Lösungsmittelgemische sind Wasser, Alkohole, Dialkylether, Ester, Nitrile, Dialkylcarbonate, Dichlormethan oder Mischungen hieraus. Vorzugsweise ist das Lösungsmittel Wasser, Methanol, Ethanol, i-Propanol, Acetonitril, Propionitril, Diethylether, 1,2-Dimethoxyethan, Dimethylcarbonat oder Diethylcarbonat.

Weiterhin ist Gegenstand der vorliegenden Erfindung die Verwendung der genannten ionischen Flüssigkeiten nach Anspruch 1 als Lösungsmittel oder Lösungsmittelzusatz, als Phasentransferkatalysator, als Extraktionsmittel, als Wärmeträger, als oberflächenaktive Substanz, als Weichmacher, als Flammschutzmittel oder als Leitsalz.

Im Falle der Verwendung der genannten ionischen Flüssigkeiten als Lösungsmittel eignen sich dieses in jeder dem Fachmann bekannten Art von Reaktion, z.B. für Übergangsmetall- oder Enzym-katalysierte Reaktionen, wie beispielsweise Hydroformylierungsreaktionen, Oligomerisierungsreaktionen, Veresterungen oder Isomerisierungsreaktionen, wobei die genannte Liste nicht abschließend ist.

Bei Verwendung als Extraktionsmittel kann die ionische Flüssigkeit zur Abtrennung von Reaktionsprodukten aber auch zur Abtrennung von Verunreinigungen eingesetzt werden, je nachdem wie die Löslichkeit der jeweiligen Komponente in der ionischen Flüssigkeit ist. Darüber hinaus können die ionischen Flüssigkeiten auch als Trennmittel bei der Separation mehrerer Komponenten dienen, beispielsweise bei der destillativen Trennung mehrerer Komponenten eines Gemisches.

Weitere Anwendungsmöglichkeiten sind die Anwendung als Weichmacher in Polymermaterialien, als Flammschutzmittel für eine Reihe von Materialien oder Anwendungen sowie als Leitsalz in unterschiedlichen elektrochemischen

Zellen und Anwendungen, z.B. in galvanischen Zellen, in Kondensatoren oder in Brennstoffzellen.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die NMR-Spektren wurden an Lösungen in deuterierten Lösungsmitteln bei 20°C an einem Bruker Avance 300 Spektrometer mit einem 5 mm Breitbandkopf $^1H$/BB mit Deuterium Lock gemessen, falls nicht in den Beispielen angegeben. Die Messfrequenzen der verschiedenen Kerne sind: $^1H$: 300,13 MHz, $^{19}F$: 282,41 MHz und $^{31}P$: 121,49 MHz. Die Methode der Referenzierung wird bei jedem Spektrum bzw. bei jedem Datensatz separat angegeben.

## Beispiele

Beispiel 1: Synthese von Bis(pentafluoroethyl)phosphinsäurechlorid

$$(C_2F_5)_2P(O)OH \;+\; PCl_5 \xrightarrow{R.T.} (C_2F_5)_2P(O)Cl \;+\; P(O)Cl_3 \;+\; HCl$$

30.0 g (99.3 mmol) Bis(pentafluoroethyl)phosphinsäure und 20.7 g (99.4 mol) Phosphorpentachlorid werden miteinander vermischt und bei Raumtemperatur für 30 Minuten gerührt.

Bis(pentafluoroethyl)phosphinsäurechlorid wird durch fraktionierende Destillation aus der Reaktionsmischung isoliert. Der Siedepunkt beträgt 118-119° C. 23.1 g einer farblosen Flüssigkeit werden erhalten. Die Ausbeute beträgt 72.6 % der berechneten Ausbeute an Bis(pentafluoroethyl)phosphinsäurechlorid.

Beispiel 2: Synthese von Bis(pentafluoroethyl)phosphinsäureamid

$$(C_2F_5)_2P(O)Cl + 2NH_3 \rightarrow (C_2F_5)_2P(O)NH_2 + NH_4Cl$$

Zu einer Lösung von 10 g (31.2 mmol) Bis(pentafluoroethyl)phosphinsäurechlorid in 50 ml trockenem Diethylether werden innerhalb von 5 Minuten 8.6 g einer 12.4 Gew.-%-igen Lösung von $NH_3$ (62.6 mmol) in trockenem

Diethylether unter Rühren bei -78°C (Trockeneis/Ethanol-Bad) zugegeben. Die Reaktionsmischung wird auf Raumtemperatur erwärmt und ungefähr 30 Minuten gerührt. Der Niederschlag wird abfiltriert und das Filtrat vom Lösungsmittel befreit. Der Rückstand wird aus eine Mischung aus Benzol und Hexan (1:2) umkristallisiert. 5.45 g eines Feststoffs mit einem Schmelzpunkt von 28-32°C werden erhalten. Die Ausbeute an Bis(pentafluoroethyl)phosphinsäureamid beträgt 58 %.

$^1H$-NMR ($CD_3CN$; Referenz: TMS): $\delta$ (ppm): 2.28 s ($NH_2$).

$^{19}F$-NMR ($CD_3CN$; Referenz: $CCl_3F$, intern; ): $\delta$ (ppm): -80.46 s ($2CF_3$); - 124.95 d ($2CF_2$); $^2J_{P,F}$ = 87 Hz.

$^{31}P$-NMR ($CD_3CN$; Referenz: 85% $H_3PO4$ -extern), $\delta$ (ppm): 0.87 quin.; $^2J_{P,F}$ = 87 Hz.

Beispiel 3: Synthese von Bis(pentafluoroethyl)phosphinsäureimid,

$[(C_2F_5)_2P(O)]_2NH$

$$(C_2F_5)_2P(O)Cl + (C_2F_5)_2P(O)NH_2 + 2\,(C_2H_5)_3N \rightarrow (C_2H_5)_3N^+[(C_2F_5)_2P(O)]_2N^- + (C_2H_5)_3N - HCl$$

$$(C_2H_5)_3N^+[(C_2F_5)_2P(O)]_2N^- + H_2SO_4 \rightarrow [(C_2F_5)_2P(O)]_2NH + (C_2H_5)_3N^+HSO_4^-$$

Zu einer gerührten Lösung von 5.21 g (17.3 mmol)

Bis(pentafluoroethyl)phosphinsäureamid in 20 ml trockenem Diethylether wird bei 0°C eine Lösung von 5.54 g (17.3 mmol)

Bis(pentafluoroethyl)phosphinsäurechlorid in 20 ml trockenem Diethylether und eine Lösung von 3.5 g (34.6 mmol) Triethylamin in 10 ml trockenem

Diethylether zugegeben. Die Reaktionsmischung wird auf Raumtemperatur erwärmt und für eine weitere Stunde gerührt. Der Niederschlag wird abfiltriert und das Lösungsmittel am Rotationsverdampfer entfernt. 2 ml konzentrierter Schwefelsäure werden zu dem Rückstand zugegeben und Bis(pentafluoroethyl)phosphinsäureimid wird im Vakuum (7 Pa) bei Temperaturen von 115-125°C abdestilliert. 7.3 g eines Feststoffs (Schmelzpunkt: 38-41 °C) werden erhalten. Die Ausbeute an Bis(pentafluoroethyl)phosphinsäureimid beträgt 72.1 %.

$^1$H-NMR ($CD_3CN$; Referenz: TMS): δ (ppm): 12.17 s (NH).

$^{19}$F-NMR ($CD_3CN$; Referenz: $CCl_3F$, intern): δ (ppm): -80.57 s ($2CF_3$); - 125.35 d ($2CF_2$); $^2J_{P,F}$ = 79 Hz.

$^{31}$P-NMR ($CD_3CN$; Referenz: 85% $H_3PO_4$-extern), δ (ppm): 1.82 quin.; $^2J_{P,F}$ = 78 Hz.

Beispiel 4: Synthese von 1-Butyl-3-methylimidazolium-bis[bis(pentafluoroethyl)phosphinyl]imid

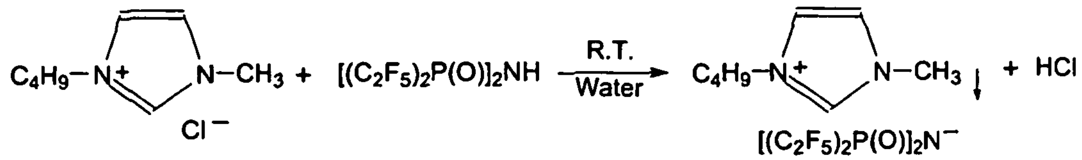


Zu einer Lösung von 5.6 g (9.57 mmol) Bis(pentafluoroethyl)phosphin-säureimid in 30 ml Wasser wird unter Rühren bei Raumtemperatur eine Lösung von 1.7 g (9.73 mmol) 1-Butyl-3-methylimidazoliumchlorid in 10 ml Wasser zugegeben. Die Mischung wird für 5 Minuten gerührt. Die gebildete untere flüssige Phase wird abgetrennt und dreimal mit 30 ml Wasser gewaschen. Nach Trocknung unter vermindertem Druck (7 Pa) bei 90°C werden 6.2 g einer Flüssigkeit erhalten. Die Ausbeute an 1-Butyl-3-methylimidazolium-bis[bis(pentafluoroethyl)phosphinyl]imid beträgt 98.6 %.

$^1$H-NMR ($CD_3CN$; Referenz: TMS): δ (ppm): 0.95 t ($CH_3$); 1.33 m ($CH_2$); 1.81 m ($CH_2$); 3.82 s ($CH_3$); 4.13 t ($CH_2$); 7.33 d,d (CH); 7.37 d,d (CH); 8.39 br. s. (CH); $^3J_{H,H}$ = 7.4 Hz; $^3J_{H,H}$ = 7.3 Hz; $J_{H,H}$ = 1.8 Hz.

$^{19}$F-NMR ($CD_3CN$; Referenz: $CCl_3F$, intern), δ (ppm): -79.89 s ($2CF_3$); - 124.77 d ($2CF_2$); $^2J_{P,F}$ = 72 Hz.

$^{31}$P-NMR ($CD_3CN$; Referenz: 85% $H_3PO_4$ -extern), δ (ppm): -0.80 quin.; $^2J_{P,F}$ = 73 Hz.

**Patentansprüche**

1. Ionische Flüssigkeit, **dadurch gekennzeichnet, dass** das Anion der Formel $[(R_F)_2P(O)]_2N^-$ entspricht, wobei $R_F$ die Bedeutung

   $(C_nF_{2n-x+1}H_x)$

   mit n = 1-6 und x = 0-4 hat, wobei für n = 1 x = 0 bis 2 sein soll, dass die Viskosität 10 bis 100 $mm^2/s$ beträgt und die elektrochemische Stabilität gegenüber Reduktion und Oxidation mehr als 4,5 V beträgt und das Kation ein Ammoniumkation ist, das der Formel (1) entspricht,

   $[NR_4]^+$ (1),

   wobei
   R jeweils unabhängig voneinander Methyl, Ethyl, Isopropyl, Propyl, Butyl, sek.-Butyl, tert.-Butyl, Pentyl oder Hexyl bedeutet
   oder
   das Kation ein Phosphoniumkation ist, das der Formel (2) entspricht

   $[PR^2_4]^+$ (2),

   wobei
   $R^2$ jeweils unabhängig voneinander Methyl, Ethyl, Isopropyl, Propyl, Butyl, sek.-Butyl, tert.-Butyl, Pentyl oder Hexyl bedeutet
   oder
   das Kation ein Uroniumkation ist, das der Formel (3) entspricht,

   $[(R^3R^4N)-C(=OR^5)(NR^6R^7)]^+$ (3),

   wobei
   $R^3$ bis $R^7$ jeweils unabhängig voneinander Methyl, Ethyl, n-Propyl, Isopropyl oder n-Butyl bedeutet
   oder

das Kation ein Thiouroniumkation ist, das der Formel (4) entspricht,

$[(R^3R^4N)\text{-}C(=SR^5)(NR^6R^7)]^+$ (4),

wobei
$R^3$ bis $R^7$ jeweils unabhängig voneinander Methyl, Ethyl, n-Propyl, Isopropyl oder n-Butyl bedeutet
oder
das Kation ein Guanidiniumkation ist, das der Formel (5) entspricht,

$[C(NR^8R^9)(NR^{10}R^{11})(NR^{12}R^{13})]^+$ (5),

wobei
$R^8$ bis $R^{13}$ jeweils unabhängig voneinander Methyl, Ethyl, n-Propyl, Isopropyl oder n-Butyl bedeutet
oder
das Kation der Formel (6) entspricht,

$[HetN]^+$ (6)

wobei
$HetN^+$

Imidazolium

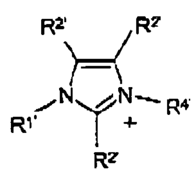

,

bedeutet, wobei die Substituenten
$R^{1'}$ und $R^{4'}$ jeweils unabhängig voneinander Methyl, Ethyl, n-Butyl oder Hexyl bedeuten und $R^{2'}$ Wasserstoff ist.

2. Ionische Flüssigkeit gemäß Anspruch 1, **dadurch gekennzeichnet, dass** das Anion $[(C_2F_5)_2P(O)]_2N^-$ ist.

3. Verfahren zur Herstellung ionischer Flüssigkeiten gemäß Anspruch 1, **dadurch gekennzeichnet, dass** Verbindungen der allgemeinen Formel (7)

$[(R_F)_2P(O)]_2NY$ (7)

worin Y = H, Alkalimetalle, Erdalkalimetalle und Metalle der Gruppen 11 und 12 des Periodensystems bedeutet, in einem Lösungsmittel oder Lösungsmittelgemisch mit Verbindungen des Typs $K^+A^-$ umgesetzt werden, wobei $K^+$ ausgewählt ist aus den in Anspruch 1 genannten Kationen und $A^-$ = $Cl^-$, $Br^-$, $I^-$, $BF_4^-$, $R'OSO_3^-$ , $R'SO_3^-$ oder $(R')_2P(O)O^-$ bedeutet, mit R' = H, nicht, teilweise oder perfluoriertes $C_1$- bis $C_6$-Alkyl, $C_3$- bis $C_7$-Cycloalkyl, unsubstituiertes oder substituiertes Phenyl.

4. Verfahren gemäß Anspruch 3, **dadurch gekennzeichnet, dass** die Umsetzung bei Temperaturen im Bereich von 0 bis 150°C erfolgt.

5. Verfahren gemäß Anspruch 3 oder 4, **dadurch gekennzeichnet dass** das Lösungsmittel ausgewählt ist aus Wasser, Alkoholen, Dialkylethern, Estern, Nitrilen, Dialkylcarbonaten, Dichlormethan oder Mischungen hieraus.

6. Verwendung ionischer Flüssigkeiten gemäß einem der Ansprüche 1 oder 2 als Lösungsmittel oder Lösungsmittelzusatz, als Phasentransferkatalysator, als Extraktionsmittel, als Wärmeträger, als oberflächenaktive Substanz, als Weichmacher, als Flammschutzmittel oder als Leitsalz.

7. Bis(pentafluoroethyl)phosphinsäureamid,
Bis(pentafluoroethyl)phosphinsäureimid.

**8.** Verwendung von Bis(pentafluoroethyl)phosphinsäurelmid zur Herstellung der Verbindung 1-Butyl-3-methyl-imidazolium bis[bis(pentafluoroethyl)phosphinyl]imid.

**9.** 1-Butyl-3-methylimidazolium bis[bis-(pentafluoroethyl)phosphinyl]imid.

## Claims

**1.** Ionic liquid, **characterised in that** the anion conforms to the formula $[(R_F)_2P(O)]_2N^-$, where $R_F$ has the meaning

$$(C_nF_{2n-x+1}H_x)$$

where n = 1-6 and x = 0-4, where, for n = 1, x should be = 0 to 2, **in that** the viscosity is 10 to 100 $mm^2/s$ and the electrochemical stability to reduction and oxidation is greater than 4.5 V,
and the cation is an ammonium cation which conforms to the formula (1),

$$[NR_4]^+ \qquad (1),$$

where
R in each case, independently of one another, denotes methyl, ethyl, isopropyl, propyl, butyl, sec-butyl, tert-butyl, pentyl or hexyl,
or
the cation is a phosphonium cation which conforms to the formula (2),

$$[PR^2_4]^+ \qquad (2),$$

where
$R^2$ in each case, independently of one another, denotes methyl, ethyl, isopropyl, propyl, butyl, sec-butyl, tert-butyl, pentyl or hexyl,
or
the cation is a uronium cation which conforms to the formula (3),

$$[(R^3R^4N)\text{-}C(=OR^5)(NR^6R^7)]^+ \qquad (3),$$

where
$R^3$ to $R^7$ each, independently of one another, denote methyl, ethyl, n-propyl, isopropyl or n-butyl,
or
the cation is a thiouronium cation which conforms to the formula (4),

$$[(R^3R^4N)\text{-}C(=SR^5)(NR^6R^7)]^+ \qquad (4),$$

where
$R^3$ to $R^7$ each, independently of one another, denote methyl, ethyl, n-propyl, isopropyl or n-butyl,
or
the cation is a guanidinium cation which conforms to the formula (5),

$$[C(NR^8R^9)(NR^{10}R^{11})(NR^{12}R^{13})]^+ \qquad (5),$$

where
$R^8$ to $R^{13}$ each, independently of one another, denote methyl, ethyl, n-propyl, isopropyl or n-butyl,
or
the cation conforms to the formula (6),

$$[HetN]^+ \qquad (6)$$

where
$HetN^+$ denotes

imidazolium

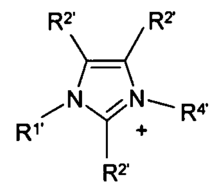

,

where the substituents
$R^{1'}$ and $R^{4'}$ each, independently of one another, denote methyl, ethyl, n-butyl or hexyl, and $R^{2'}$ is hydrogen.

2. Ionic liquid according to Claim 1, **characterised in that** the anion is $[(C_2F_5)_2P(O)]_2N^-$.

3. Process for the preparation of ionic liquids according to Claim 1, **characterised in that** compounds of the general formula (7)

$[(R_F)_2P(O)]_2NY$ (7)

in which Y = H, alkali metals, alkaline-earth metals and metals from groups 11 and 12 of the Periodic Table, are reacted with compounds of the type $K^+A^-$, where $K^+$ is selected from the cations mentioned in Claim 1 and $A^-$ = $Cl^-$, $Br^-$, $I^-$, $BF_4^-$, $R'OSO_3^-$, $R'SO_3^-$ or $(R')_2P(O)O^-$, where R' = H, non-, partially or perfluorinated $C_1$- to $C_6$-alkyl, $C_3$- to $C_7$-cycloalkyl, unsubstituted or substituted phenyl, in a solvent or solvent mixture.

4. Process according to Claim 3, **characterised in that** the reaction is carried out at temperatures in the range from 0 to 150°C.

5. Process according to Claim 3 or 4, **characterised in that** the solvent is selected from water, alcohols, dialkyl ethers, esters, nitriles, dialkyl carbonates, dichloromethane or mixtures thereof.

6. Use of ionic liquids according to one of Claims 1 or 2 as solvent or solvent additive, as phase-transfer catalyst, as extractant, as heat-transfer medium, as surface-active substance, as plasticiser, as flame retardant or as conductive salt.

7. Bis(pentafluoroethyl)phosphinamide, bis(pentafluoroethyl)phosphinimide.

8. Use of bis(pentafluoroethyl)phosphinimide for the preparation of the compound 1-butyl-3-methylimidazolium bis[bis (pentafluoroethyl)-phosphinyl]imide.

9. 1-Butyl-3-methylimidazolium bis[bis(pentafluoroethyl)phosphinyl]imide.

## Revendications

1. Liquide ionique, **caractérisé en ce que** l'anion répond à la formule $[(R_F)_2P(O)]_2N^-$, dans laquelle $R_F$ a la signification

$(C_nF_{2n-x+1}H_x)$

où n = 1-6 et x = 0-4, où, pour n = 1, x doit être = 0 à 2, **en ce que** la viscosité va de 10 à 100 $mm^2/s$ et la stabilité électrochimique par rapport à la réduction et à l'oxydation est supérieure à 4,5 V,
et le cation est un cation d'ammonium répondant à la formule (1),

$[NR_4]^+$ (1),

dans laquelle
R dans chaque cas, indépendamment les uns des autres, désigne méthyle, éthyle, isopropyle, propyle, butyle, sec-butyle, tertio-butyle, pentyle ou hexyle,
ou
le cation est un cation de phosphonium répondant à la formule (2),

$[PR^2_4]^+$ (2),

où
$R^2$ dans chaque cas, indépendamment les uns des autres, désigne méthyle, éthyle, isopropyle, propyle, butyle, sec-butyle, tertio-butyle, pentyle ou hexyle,
ou
le cation est un cation d'uronium répondant à la formule (3),

$[(R^3R^4N)\text{-}C(=OR^5)(NR^6R^7)]^+$ (3),

où
$R^3$ à $R^7$, indépendamment les uns des autres, désignent chacun méthyle, éthyle, n-propyle, isopropyle ou n-butyle,
ou
le cation est un cation de thiouronium répondant à la formule (4),

$[(R^3R^4N)\text{-}C(=SR^5)(NR^6R^7)]^+$ (4),

où
$R^3$ à $R^7$, indépendamment les uns des autres, désignent chacun méthyle, éthyle, n-propyle, isopropyle ou n-butyle,
ou
le cation est un cation de guanidinium répondant à la formule (5),

$[C(NR^8R^9)(NR^{10}R^{11})(NR^{12}R^{13})]^+$ (5),

où
$R^8$ à $R^{13}$, indépendamment les uns des autres, désignent chacun méthyle, éthyle, n-propyle, isopropyle ou n-butyle,
ou
le cation répond à la formule (6),

$[HétN]^+$ (6)

où
$HétN^+$ désigne

imidazolium

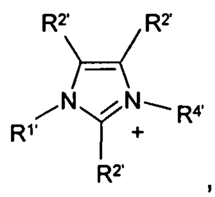

,

où les substituants
$R^{1'}$ et $R^{4'}$, indépendamment les uns des autres, désignent chacun méthyle, éthyle, n-butyle ou hexyle, et $R^{2'}$ est hydrogène.

2. Liquide ionique selon la revendication 1, **caractérisé en ce que** l'anion est $[(C_2F_5)_2P(O)]_2N^-$.

3. Procédé de préparation de liquides ioniques selon la revendication 1, **caractérisé en ce que** des composés de formule générale (7)

$[(R_F)_2P(O)]_2NY$ (7)

dans laquelle Y = H, des métaux alcalins, des métaux alcalino-terreux et des métaux des groupes 11 et 12 du Tableau Périodique, sont réagis avec des composés du type $K^+A^-$, où $K^+$ est sélectionné parmi les cations mentionnés selon la revendication 1 et $A^-$ = $Cl^-$, $Br^-$, $I^-$, $BF_4^-$, $R'OSO_3^-$, $R'SO_3^-$ ou $(R')_2P(O)O^-$, où R' = H, $C_1$-$C_6$-alkyle non ou partiellement fluoré ou perfluoré, $C_3$-$C_7$-cycloalkyle, phényle non substitué ou substitué, dans un solvant ou un mélange de solvants.

**4.** Procédé selon la revendication 3, **caractérisé en ce que** la réaction est réalisée à des températures dans le domaine de 0 à 150°C.

**5.** Procédé selon les revendications 3 ou 4, **caractérisé en ce que** le solvant est sélectionné parmi l'eau, les alcools, les dialkyléthers, les esters, les nitriles, les carbonates de dialkyle, le dichlorométhane ou des mélanges de ceux-ci.

**6.** Utilisation des liquides ioniques selon l'une des revendications 1 ou 2, comme solvant ou additif de solvant, comme catalyseur de transfert de phase, comme agent d'extraction, comme milieu caloporteur, comme substance tensioactive, comme plastifiant, comme ignifuge ou comme sel conducteur.

**7.** Bis(pentafluoroéthyl)phosphinamide, bis(pentafluoroéthyl)phosphinimide.

**8.** Utilisation de bis(pentafluoroéthyl)phosphinimide pour la préparation du composé de bis[bis(pentafluoroéthyl)phosphinyl]imide de 1-butyl-3-méthylimidazolium.

**9.** Bis[bis(pentafluoroéthyl)phosphinyl]imide de 1-butyl-3-méthylimidazolium.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6682855 B
- WO 2003087110 A
- WO 2004106287 A
- WO 2004106288 A


### In der Beschreibung aufgeführte Nicht-Patentliteratur


- **R. Sheldon.** Catalytic reactions in ionic liquids. *Chem. Commun.,* 2001, 2399-2407
- **M.J. Earle ; K.R. Seddon.** Ionic liquids. Green solvent for the future. *Pure Appl. Chem.,* 2000, vol. 72, 1391-1398
- **P. Wasserscheid ; W. Keim.** Ionische Flüssigkeiten - neue Lösungen für die Übergangsmetalikatalyse. *Angew. Chem.,* 2000, vol. 112, 3926-3945
- **T. Welton.** Room temperature ionic liquids. Solvents for synthesis and catalysis. *Chem. Rev.,* 1999, vol. 92, 2071-2083
- **R. Hagiwara ; Ya. Ito.** Room temperature ionic liquids of alkylimidazolium cations and fluoroanions. *J. Fluorine Chem.,* 2000, vol. 105, 221-227
- **Buzzeo, Marisa C. et al.** *CHEMPHYSCHEM,* vol. 5 (8), 1106-1120
- **Zhang et al.** *J. Am. Chem. Soc.,* 1985, vol. 107, 3719-3721
- **Pavlenko, N.V. et al.** *J. Gen. Chem. USSR (Engl. Transl.),* 1985, vol. 55 (7), 1410-1414
- **N.V. Pavlenko ; G.I. Matuschecheva ; V. Ya. Semenii ; L.M. Yagupolskii.** *Zh. Obsh. Khim,* 1985, vol. 55, 1586-1590